# EUROPEAN PATENT APPLICATION

(11) **EP 4 692 833 A1**
(43) Date of publication of application: **11.02.2026**
(21) Application number: 24785226.2
(22) Date of filing: 03.04.2024
(51) Int. Cl.: G01S 5/02, H04W 64/00, H04W 4/029, G01S 19/40, G01S 19/39, G01S 7/40, G01C 21/00, H04W 4/40, B60W 30/095, G08G 1/16

(54) **METHOD BY WHICH NETWORK TRANSMITS MESSAGE IN WIRELESS COMMUNICATION SYSTEM, AND APPARATUS THEREFOR**

(30) Priority: 07.04.2023 KR 20230046239; 27.04.2023 KR 20230055699
(71) Applicant: LG Electronics Inc., Yeongdeungpo-gu Seoul 07336 (KR)
(72) Inventor: KIM, Heejin, Seoul 06772 (KR)
(74) Representative: Jung, Minkyu
(86) International application number: PCT/KR2024/004351
(87) International publication number: WO 2024/210524

(57) **Abstract**

**ABSTRACT:** Disclosed are a method by which a network transmits a message in a wireless communication system, and an apparatus therefor, according to various embodiments. Disclosed are the method and the apparatus, the method comprising the steps of: receiving, from a user equipment, a negotiation request message related to prediction of mobility information of the user equipment; transmitting, to the user equipment, a message including condition information for the prediction of the mobility information of the user equipment by the network; and on the basis of reception or transmission of a notification message notifying that at least one condition included in the condition information is satisfied, transmitting a message including the mobility information predicted with respect to the user equipment.

## Description

### TECHNICAL FIELD

The present disclosure relates to a method and apparatus for transmitting a message including mobility information of a user equipment (UE) predicted by a network in a wireless communication system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

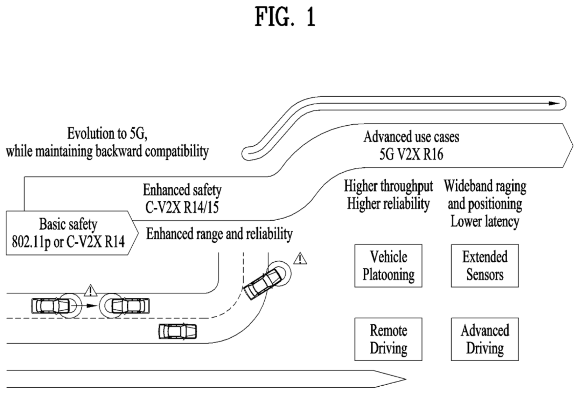

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

An object of the present disclosure is to provide a method of transmitting and receiving messages more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method for transmitting a message by a network in a wireless communication system may include receiving a negotiation request message related to prediction of mobility information of a user equipment (UE) from the UE, transmitting a message including condition information for the prediction of the mobility information of the UE by the network to the UE, and based on receiving or transmitting a notification message indicating that at least one condition included in the condition information is satisfied, transmitting a message including predicted mobility information of the UE.

Alternatively, the condition information may include information about at least one of a first threshold related to a processing capability of the UE, a second threshold related to computing power of the UE, or a third threshold related to accuracy of mobility prediction of the UE.

Alternatively, the first threshold, the second threshold, and the third threshold may be changed based on the number of UEs connected to the network or the number of UEs for which the network performs mobility information prediction.

Alternatively, when the processing capability of the UE is below the first threshold, the computing power of the UE is below the second threshold, or the accuracy of the mobility information of the UE is below the third threshold, the notification message may be received or transmitted.

Alternatively, the condition information may further include a fourth threshold related to prediction complexity of the mobility information caused by a surrounding environment of the UE.

Alternatively, the prediction complexity of the mobility information may be calculated based on a curvature of a road on which the UE is located.

Alternatively, the method may further include further transmitting negotiation assistance information to the UE, and receiving, from the UE, a message indicating whether the prediction of the mobility information of the UE by the network is accepted, determined based on the negotiation assistance information.

Alternatively, the negotiation assistance information may include information about at least one of the number of sensors that the network uses to predict the mobility information of the UE, types of the sensors, the number of messages from neighboring UEs that include object information of the UE, or a difference between mobility information of the UE predicted by the UE and mobility information of the UE predicted by the network.

According to another aspect, a network for performing the above method for transmitting a message may be provided.

According to another aspect, a processing device for controlling a network that performs the above method for transmitting a message may be provided.

According to another aspect, a method for receiving a message from a network by a UE in a wireless communication system may include transmitting a negotiation request message related to prediction of mobility information of the UE to the network, receiving a message including condition information for the prediction of the mobility information of the UE by the network from the network, and receiving or transmitting a notification message indicating that at least one condition included in the condition information is satisfied.

According to another aspect, a non-transitory computer-readable storage medium recoding instructions for performing the above method for receiving a message may be provided.

According to another aspect, a UE for performing the above method for receiving a message may be provided.

According to another aspect, a processing device for controlling a UE that performs the above method for receiving a message may be provided.

### ADVANTAGEOUS EFFECTS

According to an embodiment of the present disclosure, transmission and reception of messages in a wireless communication system may be performed more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating a method for performing communication by a server based on a message received from a UE.
FIGS. 17 to 19 are diagrams illustrating a method for performing a negotiation procedure for directly calculating/predicting mobility information of a target UE by a server.
FIG. 20 is a diagram illustrating a method for performing a negotiation procedure between a server and a target UE.
FIG. 21 is a diagram illustrating a method for transmitting a message for a prediction service to a UE by a network.
FIG. 22 is a diagram illustrating a method for performing an operation for receiving a prediction service from a network by a UE.
FIG. 23 illustrates a communication system applied to the present disclosure.
FIG. 24 illustrates wireless devices applicable to the present disclosure.
FIG. 25 illustrates another example of a wireless device to which the present disclosure is applied.
FIG. 26 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

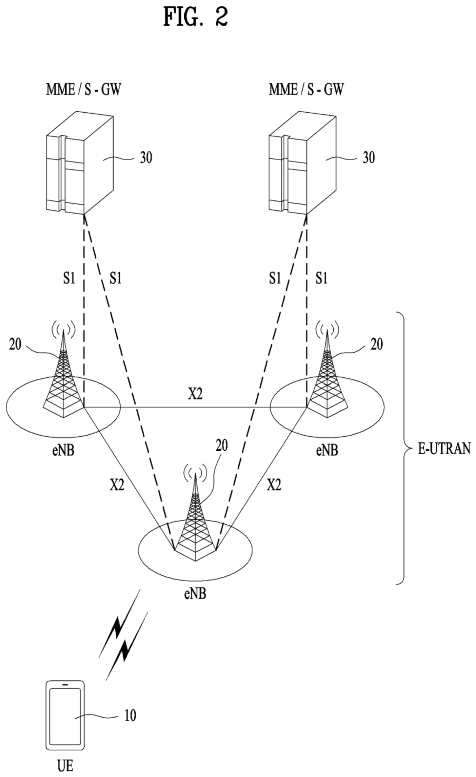

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

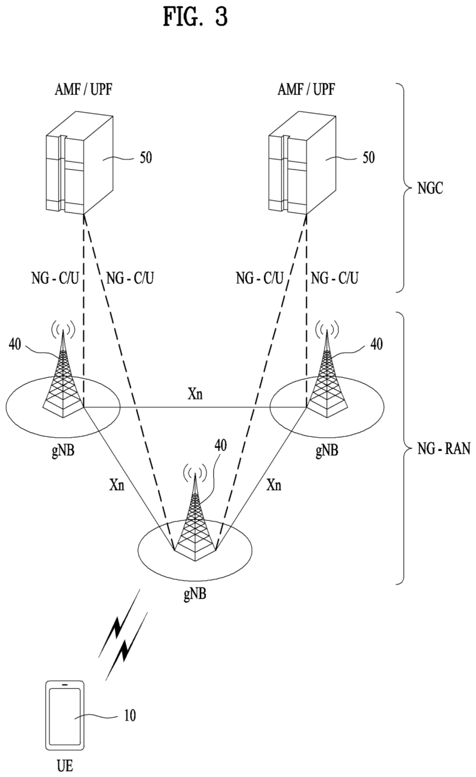

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

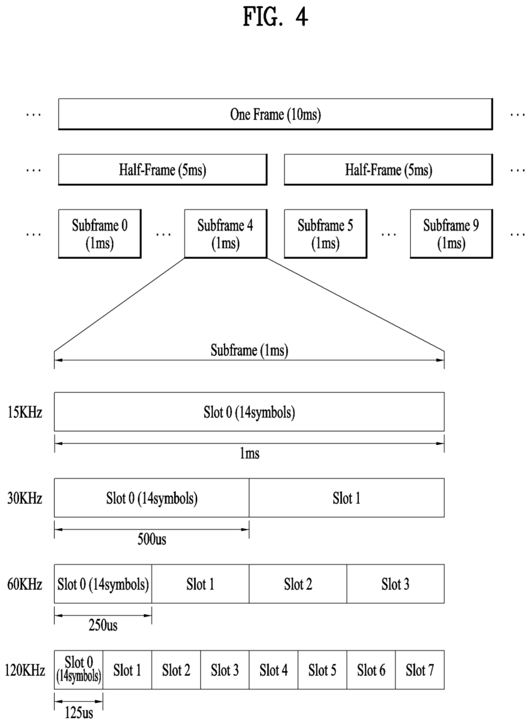

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

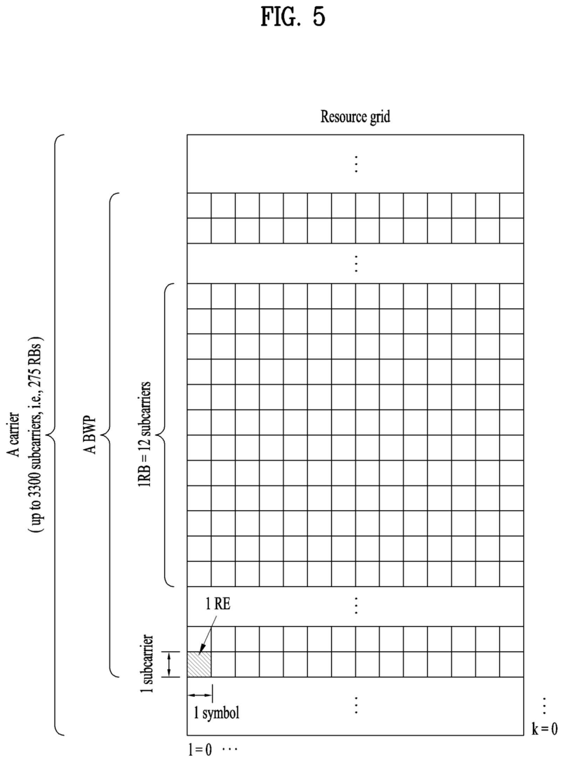

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

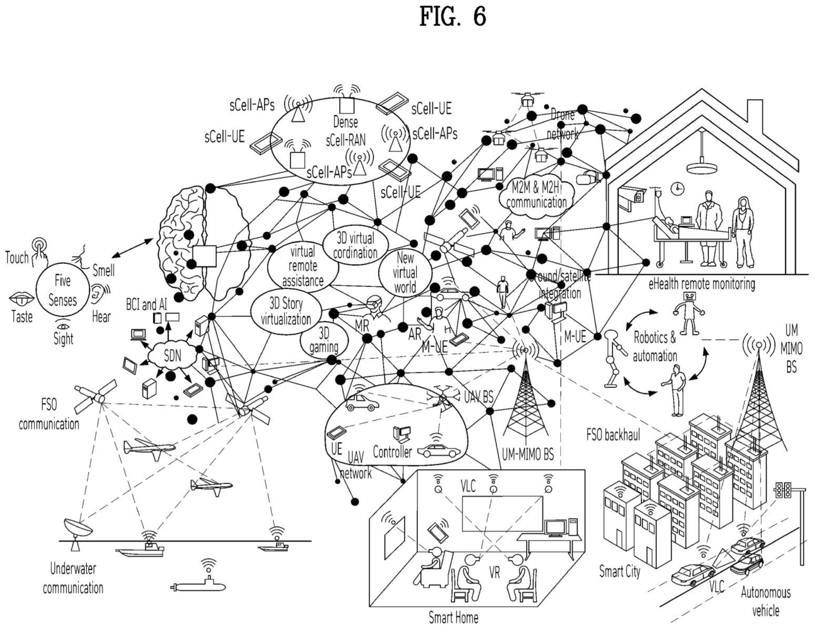

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

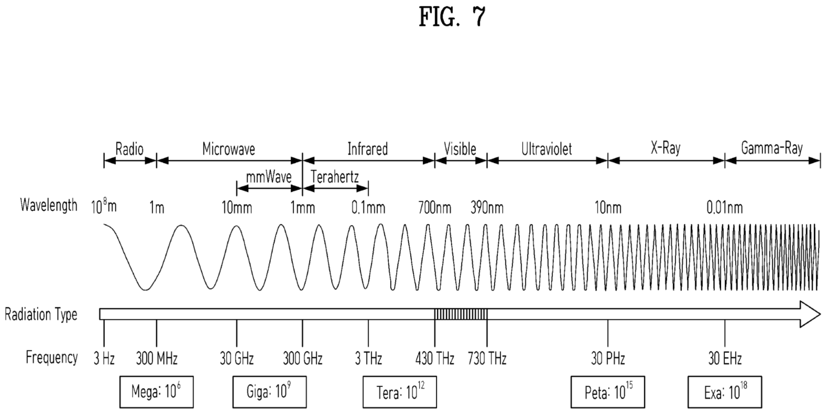

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

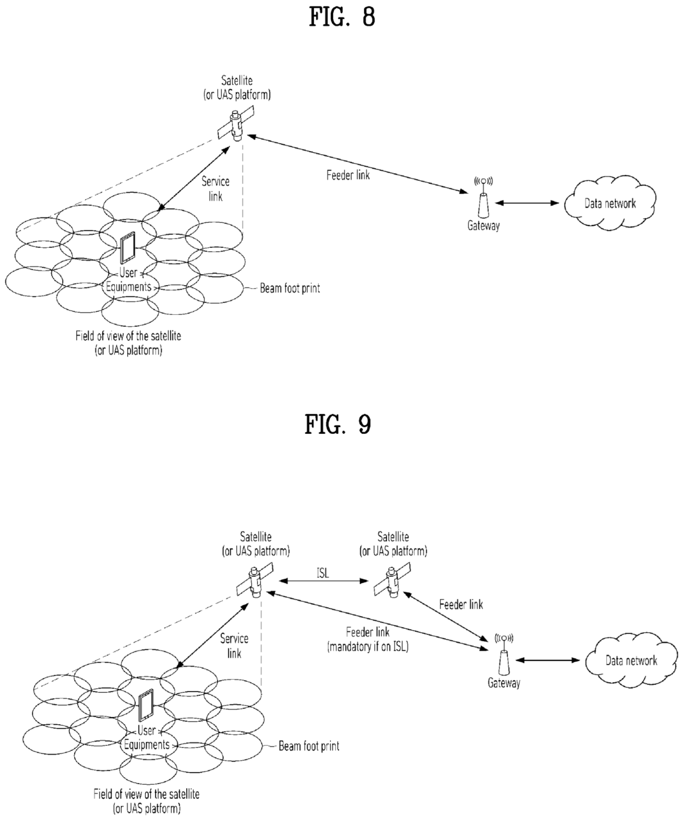

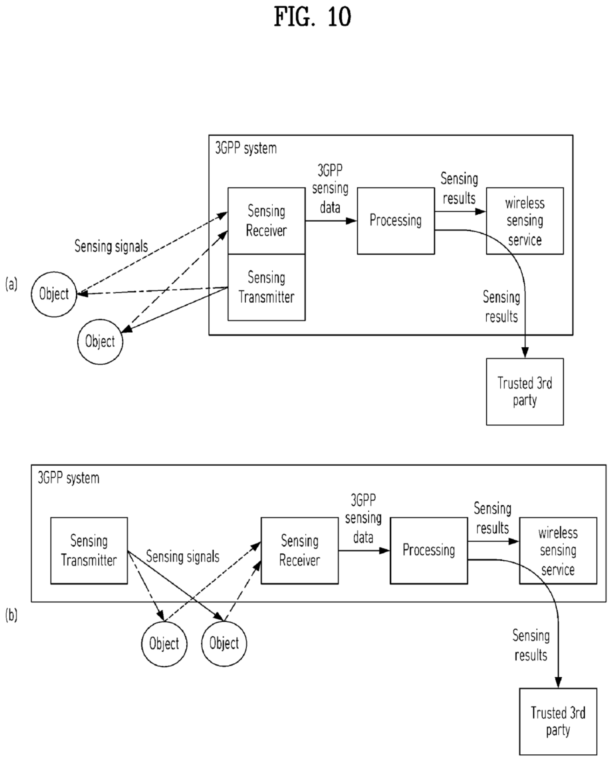

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

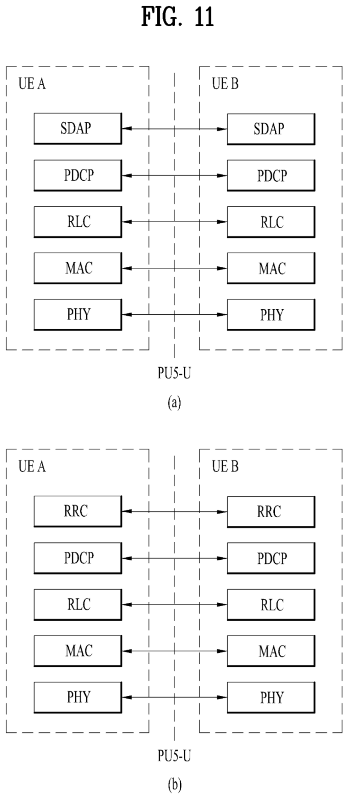

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

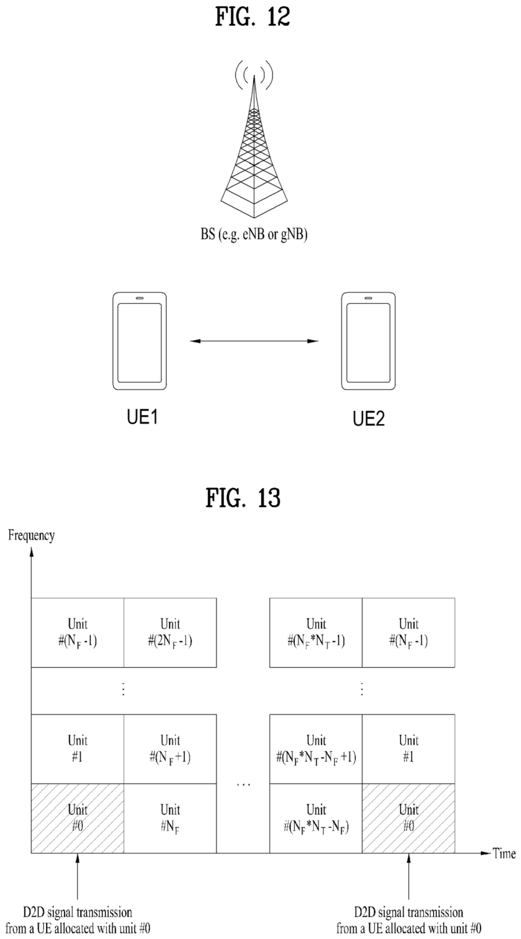

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

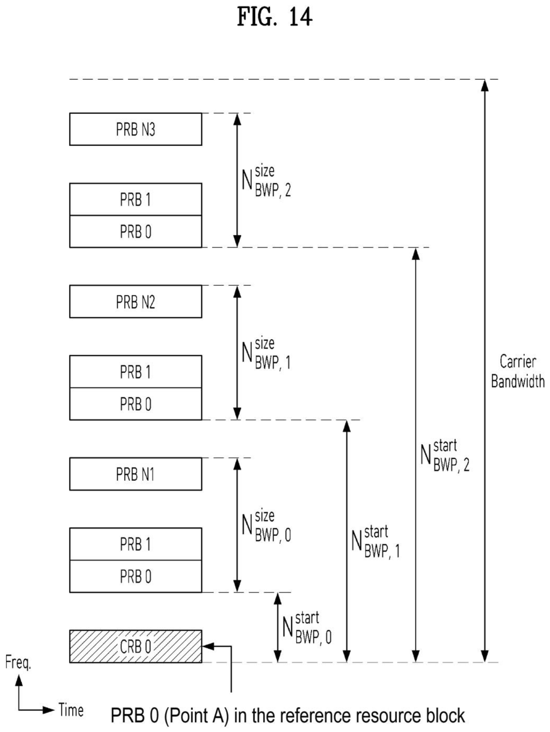

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

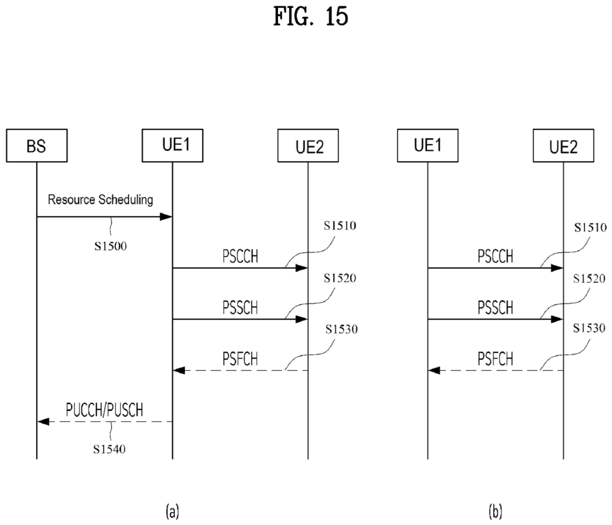

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

### Method for Transmitting Information about Location and Predicted Path of UE by Server

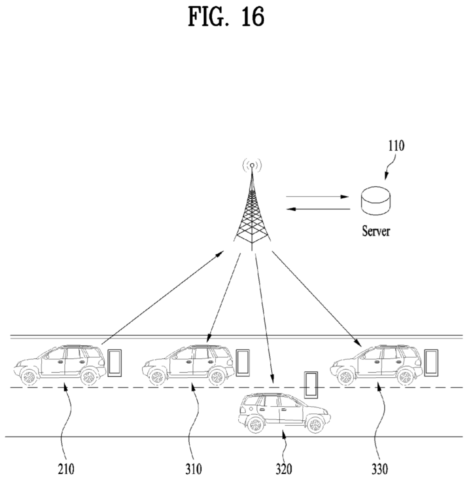

FIG. 16 is a diagram illustrating a method for performing communication by a server based on a message received from a UE.

Referring to FIG. 16, a UE 210 may calculate its location and predicted path and transmit this information in a message. Upon receipt of the message (transmitted/forwarded via a server), neighboring UEs 310, 320, and 330 may calculate the risk of collision with the target UE 210 or determine/calculate the necessity of adjusting their driving paths based on the information included in the message, such as the location and predicted path of the target UE 210. However, the precision/accuracy of the location and predicted path calculated by the UE 210 may be low for certain reasons. In this case, problems may arise in supporting a specific service (e.g., collision warning), or it may be difficult to guarantee the quality of the service. In such a case, a server/mobile edge computing (MEC) 110 connected to the UE 210 may directly calculate/predict the location and predicted path of the UE 210, based on mobility information (e.g., location, timestamp, speed, acceleration, heading, and so on) of the UE 210 included in a message received from the UE 210, information acquired from the neighboring UEs 310, 320, and 330/RSUs, and/or a learning/AI algorithm available on the server/MEC/cloud 110. In this case, the server/MEC/cloud 110 may transmit a message including information about the directly calculated/predicted location and predicted path of the UE 210 to the UE 210 and/or the neighboring UEs 310, 320, and 330, thereby increasing the accuracy of the location and predicted path of the UE 210 and improving the quality of the specific service.

For example, the server/MEC/cloud 110 may calculate the location and predicted path of the UE 210 using status/driving information about the UE 210 (i.e., a target UE for which a location and a predicted path will be directly calculated) obtained from messages transmitted by the other UEs 310, 320, and 330/RSUs (not shown), raw data measured by cameras/Lidars/radars installed on the other UEs 310, 320, and 330/RSUs (and/or information about detected objects and/or information about measurement/detection times), and so on.

The above operation of the server/MEC/cloud may be required or triggered in at least one of the statuses/situations of the target UE 210 (or server direct prediction conditions or service trigger conditions).
1. When the UE 210 has a limited computing and/or message processing capability.
2. When the tracking/prediction accuracy of the location and/or predicted path of the UE 210 is equal to or lower than a specific threshold (when at least one of the following cases ① to ⑤ is satisfied).
   - ① When the number/types of sensors (e.g., a speed/acceleration sensor, a gyroscope sensor, a barometer, a geomagnetic sensor, a GPS, a camera, and so on) of the UE 210 are insufficient to perform path prediction (i.e., when the types and number of sensors related to the UE 210 do not meet the types and number of sensors required for path prediction). For example, when they are insufficient to perform positioning and/or path prediction required (from the perspective of the requirements of a service that the UE 210 intends to support).
   - ② Even if the UE 210 has sensors, when the precision/accuracy of some/all sensors is equal to or lower than a specific level, making it difficult to meet a required precision/accuracy of path prediction (i.e., even if the UE 210 uses the required types and number of sensors for path prediction, the accuracy/precision of at least one of the sensors used is below the precision/accuracy required for path prediction).
   - ③ When the computing power of the UE 210 is insufficient to process computations required for UE positioning and path prediction (e.g., when the computing power of the UE 210 is below than computing power required for processing an AI/LM Levenberg-Marquardt algorithm related to positioning/path prediction of the UE 210).
   - ④ When the server 110 determines that the precision/accuracy of a location and predicted path that the UE 210 tracks/predicts is below the precision/accuracy of a location/predicted path of the UE directly calculated/predicted by the server 110, or that it is outside a specific error range (as described above, the server 110 may directly calculate/predict the location and predicted path of the UE 210 based on mobility information (e.g., location, timestamp, speed, acceleration, heading, and so on) of the UE 210, included in a message received from the UE 210, information acquired from the other UEs 310, 320, and 330/RSUs, and/or the learning/AI algorithm available on the server 110).
   - ⑤ When positioning information and a confidence level included in a message transmitted by the UE 210 are equal to or lower than specific threshold levels.
3. When it is necessary to simplify a UE operation/implementation/computation required for the tracking/prediction of the location/path of the UE 210, or to reduce the battery consumption of the UE 210 (e.g., when the remaining battery of the UE 210 is below a specific remaining threshold, or the remaining processing capacity of the UE 210 is below a specific threshold).
4. When it is determined that the tracking/prediction of the location/path of the UE 210 is too complex (in terms of implementation/computation) to be performed by the UE 210, and/or when the UE 210 is driving in a highly complex environment. This may be a case where at least one of the following situations ① and ② is detected.
   - ① When a variation in the driving speed/acceleration of the UE 210 is very large (e.g., equal to or greater than a preset threshold variation), or when a rapid change in the type of a road on which the UE 210 is driving is occurring or is predicted (e.g., when the UE 210 is driving on a winding road, driving in a section where a minimum/maximum allowed speed changes, when a vehicle is driving with a pedestrian/motorcycle/bicycle in a narrow alley/shoulder, or when the vehicle is entering or exiting a highway from/to a regular road). In other words, this may be a case where a variation in the driving speed/acceleration of the UE 210 is equal to or greater than a specific threshold variation, or the UE 210 enters an area where a variation equal to or greater than the specific threshold variation is predicted.
   - ② When the UE 210 is driving on a type of road or lane where the probability of a change in traffic flow is equal to or greater than a specific level (e.g., a road work, an accident area, or a bottleneck section).
5. When the number of messages simultaneously received or transmitted by the server 110/MEC/RSU (or within a specific time period) is equal to or less than a specific value and/or when the number of UEs connected to the server/MEC/RSU is less than or equal to a specific value.
6. When the server 110/MEC/RSU performs centralized situation awareness/control for UEs connected to the server 110/MEC/RSU at a higher level (or UEs located in an area where direct communication with the RSU is possible) (e.g., when neighboring UEs provide as much information as possible to the server, and the server 110/MEC/RSU takes full responsibility for tracking UE locations, calculating an accident risk, generating warning messages, and so on, based on the provided information).

As such, when the server 110 detects/determines that the UE is in at least one of the situations described in "1 to 5," it may directly calculate the location/predicted path of the UE and transmit/relay a message including the calculated location/predicted path of the UE 210 to the UE 210 and/or the neighboring UEs 310, 320, and 330.

A detailed description will be given below of the type/kind of a message used by a server, a method for configuring/adding/modifying a data element in the message, and a method for transmitting the message, when the server detects/determines that at least one of the situations from 1 to 6 described above is present and transmits a message about a directly calculated location/predicted path of a UE. In addition, the UE 210 for which a location/predicted path is directly calculated by the server 110 will be referred to as a target UE.

### Method for Transmitting Information in UE Positioning/Path Prediction Aided by Server/MEC/RSU

A detailed description will be given below of a method for calculating/correcting the location and predicted path of a target UE by a server/cloud/MEC/RSU, conditions that trigger the direct prediction of the location/predicted path of the target UE, the type of a message used by the server/cloud/MEC/RSU to transmit information related to the calculated/corrected location and/or predicted path of the UE to the UE and/or neighboring UEs/servers/RSUs, and a method for configuring/adding/modifying data elements in the message.

### 1. Method for Predicting Location/Path of Target UE by Server/Cloud/MEC/RSU

The server/cloud/MEC/RSU may calculate/track the location of the target UE and/or predict its path. Specifically, the server/cloud/MEC/RSU may calculate/track the location of the target UE and/or predict its path, based on a message received from the target UE, information acquired through communication with neighboring UEs and/or RSUs of the target UE, and/or an artificial intelligence/machine learning (AI/ML) algorithm. For example, the information acquired through communication with the neighboring UEs and/or RSUs of the target UE may include status/driving information about the target UE included in messages transmitted by the neighboring UEs and/or RSUs of the target UE, raw data measured by cameras/Lidars/radars installed on the neighboring UEs and/or RSUs, and/or information about detected objects and/or information about measurement/detection times. The server/cloud/MEC/RSU may transmit a message including the location, predicted path, heading, speed/acceleration, and curvature value of the target UE that it has predicted/calculated to the target UE, the neighboring UEs of the target UE, and/or other servers/clouds using a method such as unicast/multicast/broadcast. The operation of calculating the location of the target UE (= "Device_A") or predicting its path by the server/cloud/MEC/RSU, based on information/messages it has collected and/or the AI/ML algorithm may include at least one of the following operations.
(1) An operation of calculating/correcting the (past/current/future) location and/or predicted path (e.g., mobility information such as a speed, location, direction of movement, and predicted movement path) of the target UE by the server/cloud/MEC/RSU, using the AI/ML algorithm based on information included in a message received from the target UE (or, Device_A) within a specific time period.
(2) An operation of calculating the (past/current/future) location and/or predicted path of the target UE through fusion/learning of information included in messages received (during a specific time period) from the target UE and/or the neighboring UEs (e.g., VRUs, vehicles, RSUs, and so on) of the target UE by the server/cloud/MEC/RSU.
   - For example, the messages received from the neighboring UEs of the target UE used for the fusion/learning may be i) a VRU message (e.g., VRU awareness message (ETSI VAM) or personal safety message (SAE PSM)) including information about a VRU cluster including the target UE as a cluster member, ii) a sensor sharing message (e.g., collective perception message (ETSI CPM) or sensor data sharing message (SAE SDSM)) including the target UE as a detected object and thus including information such as the existence/location (or a relative distance from a reference UE)/object type of the target UE, iii) a message including raw/processed sensor data for an area where the target UE is estimated/expected to be located (transmitted by the neighboring UEs/RSUs of the target UE).
(3) An operation of calculating the (past/current/future) location and/or predicted path of the target UE by the RSU based on fusion/learning of information included in messages received (during a specific time period) from the target UE and/or the neighboring UEs (e.g., VRUs, vehicles, RSUs, and so on) of the target UE and raw/processed sensor data including target UE information measured by a sensor/camera installed on the RSU.

### 2. Conditions for Predicting Location/Path of Target UE by Server/Cloud/MEC/RSU

Further, the above-described operation of calculating the location and/or predicted path of the target UE may be performed based on the satisfaction of at least one of the above-described server direct prediction conditions and the following conditions.
(1) When the target UE uploads a message that does not include information about the location and/or predicted path of the target UE to the server/cloud/MEC or transmits it to the RSU without predicting its own path. For example, the target UE may transmit a message that does not include its location and/or path prediction information, when it has limited computing and message processing capabilities, when the tracking/prediction accuracy of the location/path of the target UE is equal to or lower than a specific level, or when its remaining battery level is equal to or lower than a specific level and thus power saving is needed.
(2) When the server/cloud/MEC/RSU recognizes that the precision/accuracy of information about the location/predicted path is low, even though the target UE has transmitted a message including the information about its location/predicted path to the server/cloud/MEC/RSU.
   - The recognition of whether the precision/accuracy is equal to or lower than a specific threshold/level may also be interpreted as verifying/correcting the precision/accuracy of the location and/or predicted path of the target UE, which was reported by another UE connected to the server/cloud/MEC/RSU (or located in a communicable area/in communication), by the server/cloud/MEC/RSU, based on information collected by the server/cloud/MEC/RSU. The information collected by the server/cloud/MEC/RSU may include information included in a received awareness message and sensor sharing data message, and sensing information measured by the sensor/camera of the server/cloud/MEC/RSU.

### 3. Message Transmission Method of Server/Cloud/MEC/RSU

Alternatively, the server/cloud/MEC/RSU may transmit a message (or a prediction service message) including the location, predicted path, direction of movement, speed/acceleration, and/or curvature value of the target UE that it has determined/calculated to the target UE and/or UEs located near the target UE (and/or other servers/clouds/MECs/RSUs). The prediction service message may be generated/transmitted based on at least one of the following methods (or at least one message format). The prediction service message may be a message (hereinafter, forwarding message) that simply forwards a message of the target UE or a message (hereinafter, modified message) that has been partially modified from the message of the target UE.
(1) A forwarding message by which the server/cloud/MEC/RSU forwards the most recently received message from the target UE (whose location and current/future path has been calculated/predicted by the server/cloud/MEC/RSU) as it is.
   - For example, upon recognizing that the precision/accuracy of location/predicted path information of the target UE is below a specific level, the server/cloud/MEC/RSU may calculate the location/predicted path of the target UE. The difference between a first location/predicted path of the target UE directly predicted by the server/cloud/MEC/RSU and a second location/predicted path of the target UE included in the most recently received message from the target UE may be below a specific threshold. In this case, the server/cloud/MEC/RSU may transmit the forwarding message, which simply forwards/relays the most recently received message from the target UE as it is.
   - On the other hand, unlike the method described above, when the difference between the first location/predicted path and the second location/predicted path is below the specific threshold (or equal to or less than an allowed location error), the server/cloud/MEC/RSU may not perform the transmission of the separate forwarding message. Alternatively, the server/cloud/MEC/RSU may not retransmit the entire message it received (most recently) from the target UE as a forwarding message. Alternatively, the server/cloud/MEC/RSU may transmit a forwarding message that includes only information/an indicator indicating that the difference between the first location/predicted path and the second location/predicted path is below the specific threshold. Alternatively, the server/cloud/MEC/RSU may transmit the forwarding message including the information/indicator and some information (e.g., target UE ID, timestamp, target UE location and/or predicted path information) included in the message of the target UE to the target UE and/or the neighboring UEs of the target UE.
(2) A new message that the server/cloud/MEC/RSU newly creates (from the perspective of message content and format).

For example, the server/cloud/MEC/RSU may transmit the new message, which is a new message including the location, predicted path, and/or UE status/characteristic information of the target UE at a current time (or a time closest to the current time), identified/calculated by the AI/ML algorithm based on i) information acquired through communication with the target UE and/or the neighboring UEs (or RSUs) and ii) information acquired by a sensor/camera interworking with the server/cloud/MEC/RSU (e.g., raw/processed sensor data obtained by a sensor installed/interworking with the RSU).

Alternatively, the server/cloud/MEC/RSU may generate a new message (or prediction message) including the most recent location/status (e.g., speed, acceleration, direction of movement, and so on)/predicted path of the target UE that it has calculated/identified, and transmit the new message to the target UE (and/or the neighboring UEs of the target UE and other servers/RSUs). In this case, the new message may be a different kind or type of message from the message of the target UE. For example, the server/cloud/MEC/RSU may receive an awareness message (CAM/BSM/VAM/PSM) for an individual UE or some/essential data elements (e.g., UE ID, timestamp, UE location, UE type, and predicted path) that may be included in the awareness message, from the target UE. In this case, the new message including the location/predicted path of the target UE directly predicted/calculated by the server/cloud/MEC/RSU may be of a warning message type related to the target UE, such as a CPM and/or a decentralized environmental notification message (DENM), or a message type including object information of the target UE (object information including raw/processed sensor data), or a newly defined message type for transmitting UE information (e.g., a UE location, a type, and a predicted path) directly calculated/predicted by the server/cloud/MEC/RSU.

The "newly defined message type" may include, as essential data fields, UE information (e.g., a UE type, the absolute value of a UE location/predicted path, a relative value of the location/predicted path of the target UE with respect to a specific reference location (e.g., RSU location)) of the target UE calculated/predicted by the server/cloud/MEC/RSU, and the difference value between the location/predicted path of the UE included in a message previously transmitted by the target UE and the location/predicted path of the UE directly predicted/calculated by the server/cloud/MEC/RSU (or a correction value for the location/predicted path of the target UE). Additionally, the newly defined message type may include, as essential or optional data fields, information such as a message type (e.g., a location correction (positioning precision/accuracy improving) service message), a transmitting UE ID (e.g., a UE ID assigned to the server/RSU), and information for indicating which UE's location/predicted path/type at what time is calculated/corrected (e.g., the ID of the target UE and a timestamp for a time at which the corrected/calculated location should be applied).

(3) A modified message in which some data fields of the most recently received message from the target UE have been modified or some data fields have been added to the message, while maintaining the format of the message.
a. The server/cloud/MEC/RSU may generate/transmit a modified message in which some data fields of the message from the target UE have been modified/supplemented or some data fields have been added, to include the location/predicted path of the target UE (and/or mobility information and characteristic information of the target UE) directly predicted based on acquisition information that it has directly obtained. The acquisition information may include the location, predicted path, and/or UE status/characteristic information of the target UE at a current time (or a time closest to the current time), identified/calculated by the AI/ML algorithm based on i) information obtained through communication with the target UE and/or the neighboring UEs (or RSUs) and ii) information obtained by the sensor/camera interworking with the server/cloud/MEC/RSU (e.g., raw/processed sensor data obtained by the sensor installed/interworking with the RSU).
b. For example, the modified message generated by the server/cloud/MEC/RSU may be of the same type/format as the message of the target UE. The modified message may include information that has been updated/corrected in some data fields of the message of the target UE by the server/cloud/MEC/RSU, and/or include additional specific data fields. For example, the data fields including the updated/corrected information may be data fields for the location, status (e.g., pedestrian/vehicle occupant/kickboard rider), speed, acceleration, turning speed/radius, direction of movement, path points used for representing the predicted path/path history (or mobility information) of the UE that have been identified as requiring an update out of the information, such as a UE location, a predicted path, and status calculation/prediction, included in the message of the target UE. The server/cloud/MEC/RSU may transmit the modified message in which some data fields of the message of the target UE have been modified and/or specific data fields have been added to the message of the target UE, to the target UE/neighboring UEs/servers/RSUs.
   - The type of the modified message in which some data elements have been updated/added by the server/cloud/MEC/RSU may be an awareness message (e.g., CAM, VAM, BSM, or PSM). In this case, information indicating that some data elements/fields of the message of the target UE have been modified by the server/cloud/MEC/RSU and/or information indicating the data fields/data elements modified among the data fields/data elements included in the message of the target UE may be additionally included in the modified message. Alternatively, the server/cloud/MEC/RSU may transmit a modified message that includes all data fields/data elements included in the message of the target UE and all data fields/data elements modified/added by the server/cloud/MEC/RSU. For example, the message of the target UE and the modified message in which some data elements/data fields have been modified/added by the server/cloud/MEC/RSU may be transmitted together, or one merged message that combines the message of the target UE and the modified message may be transmitted. In the latter case, the one merged message may additionally include only variations in the values of some data elements/data fields that were updated/modified from the message of the target UE, and reduce a signaling load and message size, compared to the case where the message of the target UE and the modified message are transmitted together.
   - Further, an ID (e.g., Station ID included in the ITS PDU header in the ETSI ITS standard, or TemporaryID in SAE J2735 DE) of the target UE included in the modified message in which some data elements have been updated by the server/cloud/MEC/RSU may be an ID of the target UE included in the message of the target UE, or an ID assigned to the target UE by the server/cloud/MEC/RSU. As described above, in the case where the message of the target UE and the modified message are transmitted together, the modified message may include the ID of the target UE assigned by the server/cloud/MEC/RSU. Through this, the messages transmitted together may be distinguished from each other. Additionally, the server/cloud/MEC/RSU may continuously receive/decode a message from the target UE and immediately change an ID/certificate/MAC address assigned to the target UE, if the ID included in the message of the target UE overlaps with the ID it has assigned to the target UE. In this case, a timing of changing the ID included in the message of the target UE and a timing for changing the ID assigned by the server/cloud/MEC/RSU to transmit information about the target UE (e.g., a correction value for the location and predicted path of the target UE) may be linked. In this case, when the ID included in the message of the target UE is changed, the server/cloud/MEC/RSU may trigger the change of the ID assigned to the target UE at the server/cloud/MEC/RSU.
   - Alternatively, to distinguish between the message of the target UE and a modified message that includes information corrected/verified by the server/cloud/MEC/RSU, different message IDs may be used for the two messages. For example, the modified message including the information corrected/verified by the server/cloud/MEC/RSU may use a message ID assigned for a message such as a proxy/surrogate BSM/CAM/VAM/PSM, or a message ID assigned for a positioning accuracy improvement/correction service message.

The above-described methods of generating messages (generating/transmitting a new message and a modified message), that is, methods (2) and (3) may be similarly applied not only to (network-based) communication between a server and a UE/server/RSU but also to communication between other different entities (e.g., communication between an RSU and an RSU/server/UE or communication between UEs (e.g., between a direct communication dedicated UE and a smartphone)).

In generating/modifying a message (generating a new message) based on "(2)" described in relation to generating/modifying the message, the server/cloud/MEC/RSU may decode/analyze a message received from the target UE, and calculate/predict (current/latest) characteristics/status (e.g., location/speed/acceleration/heading/device type (e.g., vehicle/bicycle/pedestrian)) of the UE, based on information obtained from the neighboring UEs/RSUs and/or the learning/AI algorithm available on the server 110. When the server/cloud/MEC/RSU determines that the status/characteristic information of the UE included in the message of the target UE is inaccurate or needs correction, it may generate a new message including the most recent characteristics/status of the target UE that it has calculated/predicted, and transmit the generated new message to the target UE/neighboring UEs/servers/RSUs. This means that the characteristics of the UE that may be determined/calculated/corrected and transmitted by the server/cloud/MEC/RSU to the UEs/servers/RSUs are not limited to a location and a predicted path. In addition, "when it is determined that the information (e.g., location/speed/acceleration/direction of movement/device type (e.g., vehicle/bicycle/pedestrian)) included in the message of the target UE is inaccurate or needs correction" may be a condition that triggers the generation/transmission of a new message for the target UE by the server/cloud/MEC/RSU.

Alternatively, in generating/transmitting a modified message based on "(3)," the server/cloud/MEC/RSU may decode/analyze the message received from the target UE and calculate/predict (current/latest) characteristics/status (e.g., location/speed/acceleration/heading/device type (e.g., vehicle/bicycle/pedestrian)) of the target UE, based on status information of the target UE obtained from the other neighboring UEs/RSUs and/or the learning/AI algorithm available on the server/cloud/MEC/RSU. When the server/cloud/MEC/RSU determines that status/characteristic information of the UE included in the message of the target UE is inaccurate or needs correction, it may modify only some data fields/elements that need correction/modification in the message of the target UE, based on the most recent characteristics/status of the target UE that it has calculated/predicted, and transmit the modified message, which is the message of the target UE with some data fields/elements modified/supplemented, to the neighboring UEs/servers/clouds/MECs/RSUs. "When it is determined that the information (e.g., location/speed/acceleration/heading/device type (e.g., vehicle/bicycle/pedestrian)) included in the message of the target UE is inaccurate or needs correction" and/or "when the server/cloud/MEC/RSU has updated some data fields/elements included in the message of the target UE" may be a condition that triggers the transmission of the modified message from the server/cloud/MEC/RSU.

### Negotiation Procedure for Message Transmission from Server/MEC/Cloud/RSU

As described above, the server/MEC/cloud/RSU may correct/verify/calculate the location or predicted path of the target UE (hereinafter, target UE) and generate/transmit a message (hereinafter, prediction service message) related to the target UE, which includes the corrected/verified/calculated result. The server/MEC/cloud/RSU needs to negotiate with the target UE (e.g., propose/request/accept/reject) whether to generate/transmit the prediction service message. For example, the negotiation between the server/MEC/cloud/RSU (hereinafter, server) and the target UE may be performed, as follows.

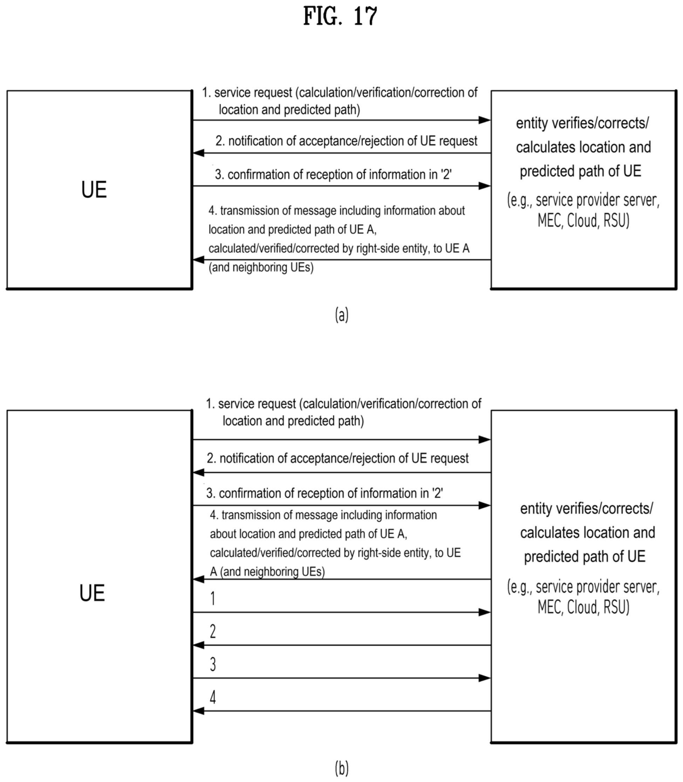

FIGS. 17 to 19 are diagrams illustrating a method for performing a negotiation procedure for directly calculating/predicting mobility information of a target UE by a server.

### 1. Negotiation Based on UE Request

The target UE may perform a negotiation procedure with the server to request calculation/prediction of its mobility information from the server.

Referring to FIG. 17(a), the target UE (UE A) may transmit a negotiation request message requesting the negotiation procedure to the server. When the UE satisfies at least one of the above-described server direct prediction conditions, the negotiation request message may be transmitted.

Specifically, when at least one of the server direct prediction conditions is satisfied, the target UE (UE A) may transmit a negotiation request message requesting location/prediction correction to the server (1. Service Request). The server may transmit an acceptance message for the negotiation request message (2. Notification of Acceptance/Rejection of UE Request). The target UE may transmit a message confirming the acceptance message (3. Confirmation of Reception of Information in 2). When accepting the request from the target UE (UE A), the server may transmit a prediction service message including correction information obtained by directly predicting/calculating mobility information of the target UE (UE A) (4. Transmission of Message Including Information about Location/Predicted Path of Target UE Calculated/Corrected by Right-Side Entity).

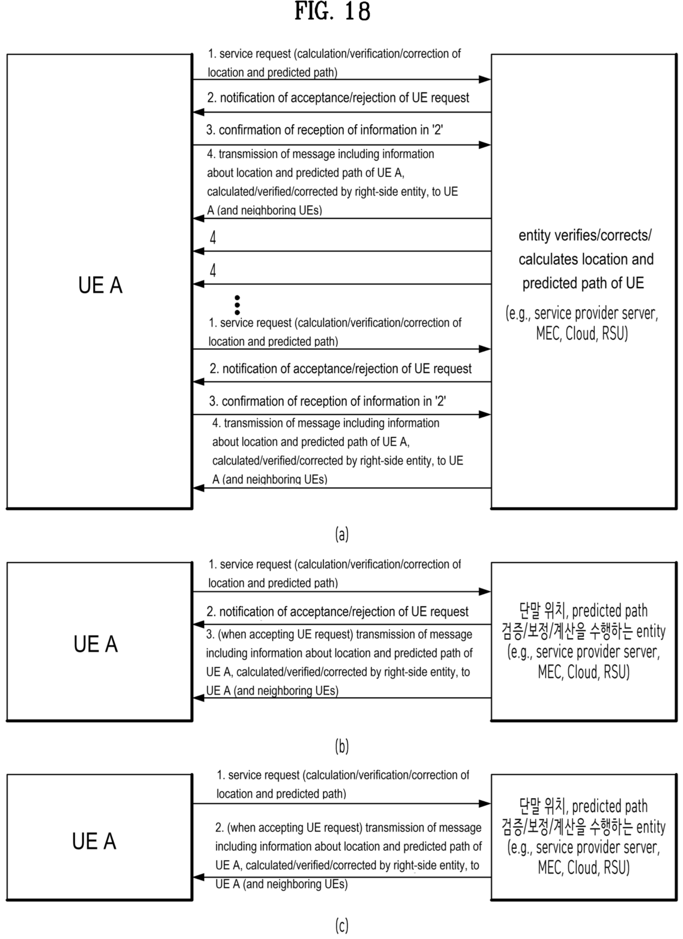

After one prediction service message is generated/transmitted in step 4 of FIG. 17(a), the procedure from 1 to 4 may be repeated between the target UE (UE A) and the server. However, as illustrated in FIG. 17(b), after steps "1 to 3" are performed once, only operation "4" may be performed (during a specific preset time period, or a time period during which the at least one server direct prediction condition is satisfied) (i.e., it may continuously generate/transmit the prediction service message for the target UE (UE A) during the specific time period). When the specific time period has elapsed after the procedure "1 to 3" has ended, the target UE (UE A) and the server may restart the procedure 1 to 3, if at least one of the server direct prediction conditions is not satisfied (refer to FIG. 18(a)).

Alternatively, referring to FIG. 18(b), the target UE (UE A) may transmit a negotiation request message requesting its location/prediction correction to the server (1. Service Request). The server may transmit an acceptance message for the negotiation request message (2. Notification of Acceptance/Rejection of UE Request). (When accepting the request from the target UE (UE A),) the server may transmit a prediction service message including correction information for the location/predicted path of the target UE (UE A) directly predicted/calculated for the target UE (3. Transmission of Message Including Information about Location/Predicted Path of Target UE (UE A) Calculated/Corrected by Right-Side Entity).

Alternatively, referring to FIG. 18(c), the target UE (UE A) may transmit a negotiation request message requesting its location/prediction correction to the server (1. Service Request). The server may transmit a prediction service message including correction information for the location/predicted path of the target UE (UE A) directly predicted/calculated by the server, without transmitting an acceptance message for the negotiation request message (2. Transmission of Message Including Information about Location/Predicted Path of Target UE (UE A) Calculated/Corrected by Right-Side Entity).

### 2. Negotiation (or Operation) Based on Server Proposal

The server may identify the status of the target UE (UE A) related to at least one of the above-described server direct prediction conditions, and determine whether the at least one condition is satisfied. When the status of the target UE (UE A) satisfies the at least one condition, the server may calculate/predict the location/predicted path of the target UE (UE A) and transmit a prediction service message including information about the predicted/calculated location/predicted path of the target UE (UE A), based on the following operations.

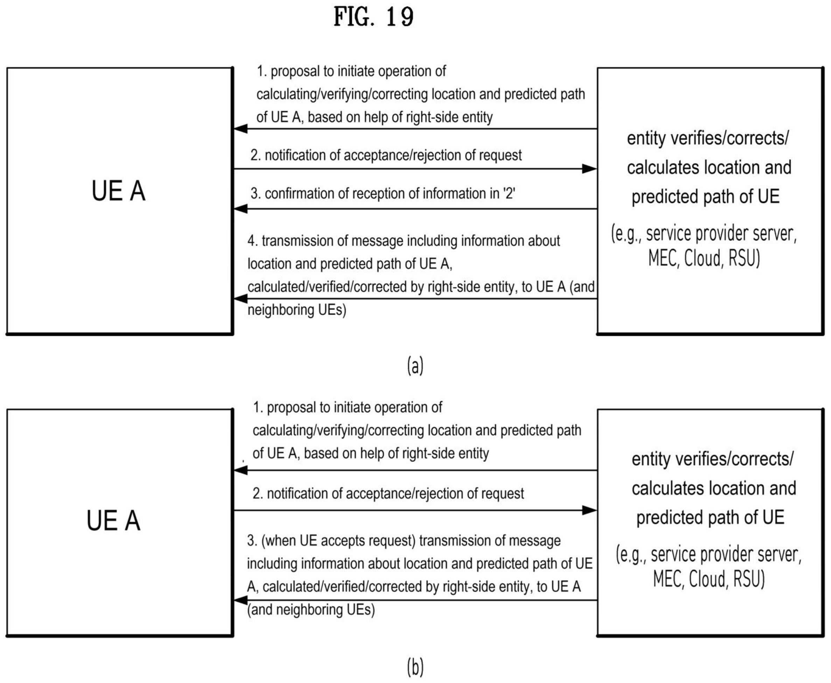

Referring to FIG. 19(a), the server may transmit a negotiation request message to the target UE (UE A), proposing direct prediction/correction of the location/predicted path of the UE (1. Proposal to Initiate Operation of Calculating/Verifying/Correcting Location/Predicted Path of Target UE (UE A) with Help of Right-Side Entity). The server may receive a notification message from the target UE (UE A), which includes information about acceptance/rejection of the proposal (2. Notification of Request Acceptance/Rejection). The server may transmit an approval message including information about approval/confirmation for the notification message (3. Confirmation of Reception of Information in 2). (When the target UE (UE A) accepts the proposal,) the server may directly calculate/predict the location/predicted path of the target UE (UE A) and transmit a prediction service message including information about the predicted/calculated location/predicted path of the target UE (UE A) (4. Transmission of Message Including Information about Location/Predicted Path of Target UE (UE A) Calculated/Corrected by Right-Side Entity).

Referring to FIG. 19(b), the server may transmit a negotiation request message to the target UE (UE A), proposing direct prediction/correction of the location/predicted path of the UE (1. Proposal to Initiate Operation of Calculating/Verifying/Correcting Location/Predicted Path of Target UE (UE A) with Help of Right-Side Entity). The server may receive a notification message from the target UE (UE A), which includes information about acceptance/rejection of the proposal (2. Notification of Request Acceptance/Rejection). (When the target UE (UE A) accepts the proposal,) the server may directly calculate/predict the location/predicted path of the target UE (UE A) and transmit a prediction service message including information about the predicted/calculated location/predicted path of the target UE (UE A) (3. Transmission of Message Including Information about Location/Predicted Path of Target UE (UE A) Calculated/Corrected by Right-Side Entity).

A separate message may be defined for the purpose of indicating the start of the prediction service (the service of directly predicting/calculating mobility information such as the location/predicted path of the target UE (UE A) by the server)/operation. The separate message may include the ID of the target UE (UE A), an ID of a location/prediction correction service or a message used/defined for the location/prediction correction service, and an indicator (bit or bit stream) indicating/signaling the start/end of the location/prediction correction service. The target UE (UE A) that has received the separate message transmitted by the server may determine whether to allow the server to generate/transmit a prediction service message including its location/path prediction (correction) information. For example, the target UE (UE A) may determine whether to allow the server to generate/transmit a prediction service message including its location/path prediction (correction) information based on a specific predefined criterion. When the target UE (UE A) determines that its location/prediction information calculated/verified/predicted by the server is inaccurate or unnecessary, it may transmit a message to the server, requesting the server to stop the transmission of the prediction service and/or the prediction service message including its location/prediction information.

### 3. Server Direct Prediction Conditions Described Above

The above-described server direct prediction conditions may be summarized as follows.
A. When the UE has limited computing and message processing capabilities.
B. When the accuracy of UE positioning and/or the accuracy of UE location/path tracking/prediction is equal to or lower than a specific level.
   - For example, when the number/types of sensors (e.g., a speed/acceleration sensor, a gyroscope sensor, a barometer, a geomagnetic sensor, a GPS, a camera, and so on) of the UE is insufficient (less than a specific threshold number) to perform positioning and/or path prediction required by the UE (e.g., required from the perspective of UE hardware requirements and service requirements that the UE intends to support).
   - For example, even if the UE has sensors, when the precision/accuracy of some/all sensors is equal to or lower than a specific level (a specific threshold precision), making it difficult to satisfy the required positioning and/or path prediction precision/accuracy.
   - For example, when the computing power of the UE is insufficient (less than a specific threshold power) to process computations required for UE location/path prediction. For example, when the UE is not capable of processing an AI/LM algorithm related to UE location/path prediction, or when the spare computing power of the UE is lower than computing power required for processing the AI/LM algorithm.
   - For example, when the precision/accuracy of a location and/or predicted path tracked/predicted by the UE is lower than the precision/accuracy of a location/predicted path of the UE directly predicted by the server, or when the difference between the two is equal to or greater than a (preset/pre-agreed) specific error level.
   - For example, when the confidence level of positioning/predicted path information included in a message transmitted by the UE is equal to or lower than a specific confidence level.
C. When it is necessary to simplify a UE operation/implementation/computation required for UE location tracking and path prediction or to reduce UE battery consumption.
D. When it is determined that the tracking/prediction of the location/path of the UE is too complex (in terms of implementation/computation) to be performed by the UE, and/or when the UE is driving in a highly complex environment.
   - For example, when a variation in the driving speed/acceleration of the UE is greater than a specific threshold variation, when a rapid change in the type of a road the UE is driving on is occurring (e.g., when driving on a winding road, when driving in a section where a minimum/maximum allowed speed changes, when a vehicle is driving with a pedestrian/motorcycle/bicycle in a narrow alley/shoulder, or when the vehicle enters or exits a highway from/to a regular road), when the curvature of the road the UE is driving on is equal to or greater than a specific threshold curvature, or when the direction of the road is equal to or greater than a specific threshold direction.
   - For example, when the UE is driving on a type of road or lane where the probability of a change in traffic flow is equal to or greater than a specific threshold probability (e.g., a road work, an accident area, or a bottleneck section).
E. When the number of messages simultaneously received (or transmitted) by the server (or within a specific time period) is equal to or less than a specific value, and/or when the number of UEs connected to the server is equal to or less than a specific value.
F. When the server performs centralized situation awareness/control for UEs connected to the server/MEC/RSU (or, UEs located in an area where direct communication with the RSU is possible) at a higher level (e.g., neighboring UEs provide as much information as possible to the server, and the server/MEC/RSU takes full responsibility for tracking UE locations, calculating an accident risk, or generating warning messages, based on that information).

### 4. Information Exchangeable in Negotiation Procedure Between UE and Server

The target UE and the server may exchange condition information about at least one of the above-described server direct prediction conditions and/or negotiation assistance information in a negotiation procedure for a service related to prediction/correction of the location/predicted path of the target UE based on the server's help.

### (1) Exchange of Condition Information

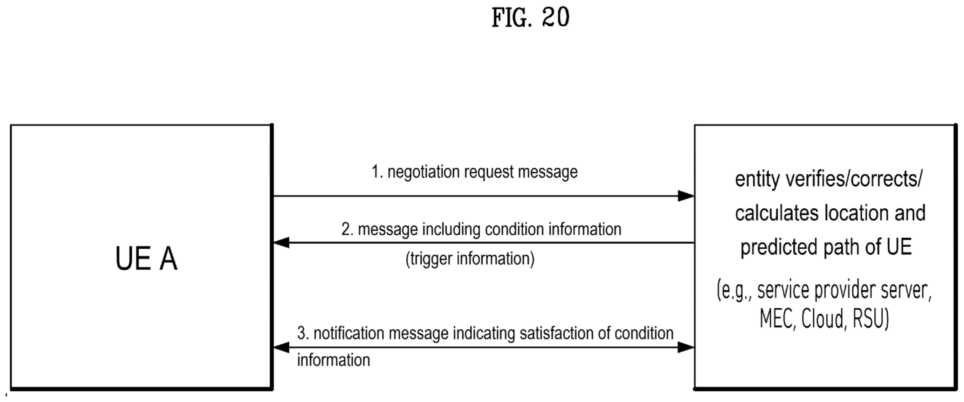

FIG. 20 is a diagram illustrating a method for performing a negotiation procedure with a server by a target UE.

At least one of the prediction conditions for directly predicting/correcting the location/predicted path of the target UE by the server may be pre-agreed upon/pre-shared between the target UE and the server (through a separate negotiation procedure).

Specifically, referring to FIG. 20, the target UE may transmit a negotiation request message related to a request for the prediction service to the server. The target UE may receive a response message including condition information about at least one of the server direct prediction conditions from the server. For example, the server may determine at least one condition included in the condition information or determine a threshold related to the at least one condition, based on the number of UEs supporting the location/prediction correction service, a surrounding situation (e.g., a density or a road environment) of the target UE, and the number of pieces of status information/sensing information related to the target UE that the target UE may provide. As such, to use the location/prediction correction service, the target UE may acquire in advance the condition information related to the request for the location/prediction correction service from the server through the negotiation procedure.

Subsequently, when the target UE satisfies the at least one condition included in the condition information, it may transmit a notification message indicating the satisfaction of the at least one condition to the server. Alternatively, the target UE may receive a notification message indicating that the at least one condition is satisfied from the server. In this case, since the target UE has already transmitted the negotiation request message, the server may perform the prediction service for the target UE even without a separate approval message from the target UE.

### (2) Exchange of Negotiation Assistance Information

In the process of requesting/negotiating/proposing/accepting/approving the "operation of directly correcting/verifying/calculating the location/predicted path of the UE by the server" between the target UE and the server, at least one of the following pieces of negotiation assistance information may be exchanged. Alternatively, the following negotiation assistance information may be exchanged for the purpose of allowing the UE to predict/determine in advance the necessity/validity/gain (expected precision/accuracy of the location/predicted path) of the "operation of directly correcting/verifying/calculating the location/predicted path of the UE by the server."
- Information a: Sensor information (e.g., sensor type/number/accuracy/precision/location) used when the server directly corrects/predicts/calculates the location/predicted path of the UE.
- Information b: The number/types/reception times/generation times of messages received from neighboring UEs/RSUs, which include information about the target UE during a specific time period (excluding a message (e.g., PSM or VAM) including information about the target UE transmitted by the target UE itself).
- Information c: A (min/max/average) latency that occurs at the server/RSU side, when the server directly corrects/verifies/predicts/calculates the location/predicted path of the UE.
- Information d: Whether the UE supports the service of directly predicting/calculating/correcting/verifying the location/predicted path of the UE (considering the data traffic and/or computing power of the server at a current time (or during a specific time period)).
- Information e: (When the service is available,) the quality (e.g., accuracy/precision/confidence level) of location/prediction information that the server may guarantee. Or the accuracy/precision/confidence level of the location/predicted path of the UE that the UE requires from the server.
- Information f: Information about the location and predicted path of the UE at a current/specific time (determined/calculated by the server), and/or the difference value between the location and predicted path of the UE at the current/specific time determined/calculated by the server and the location and predicted path of the UE that may be obtained from a message of the UE (or information provided to the server).

For example, when the above-described negotiation assistance information is exchanged between the UE and the server, the above-described operations of "1. Negotiation based on UE request" and/or "2. Negotiation (or operation) based on server/RSU proposal" may be performed in the following procedure.

### 1) In the case of operation based on UE request

- When the target UE requests correction for its location/predicted path from the server, and correction/prediction of the location/predicted path is possible at the server, the server may transmit negotiation assistance information to the target UE. The negotiation assistance information may include sensor information that may be used when correcting/predicting the location/predicted path of the target UE, information about the existence of received information/messages about the target UE (excluding a message (e.g., PSM or VAM) including information about the target UE transmitted by the target UE itself), and/or the types of received information/messages about the target UE (at least one of information a to f). In addition, in the above-described negotiation procedure, the server may transmit condition information related to the server direct prediction conditions to the target UE. In this case, the target UE may determine whether to calculate/predict its own location/predicted path with the help of the server, based on the negotiation assistance information and/or the condition information, and transmit information about the determination to the server. (When accepting the UE request,) the server may transmit an approval message and then a prediction service message including correction information/prediction information for the location/predicted path of the target UE.
- For example, the target UE may determine whether to accept/reject the service proposal from the server, based on the following specific criteria and/or the above-described negotiation assistance information. The specific criteria may be a combination of at least one of the above-described server direct prediction conditions (A to F). For example, when at least one of the following specific criteria is met, the target UE may transmit a message accepting the prediction service provision of the server to the server. Information related to characteristics of the server may be received in advance from the server.
   -- When the number of sensors that the server may use in prediction/correction of the location/predicted path of the UE is equal to or greater than a (preset) specific number.
   -- When the number of the types of sensors that the server may use in prediction/correction of the location/predicted path of the UE is equal to or greater than a (preset) specific number (and/)or when it is possible to use a specific type of sensor information (e.g., a Lidar or a high-precision sensor).
   -- When there is a sensor with a precision (and/or accuracy) of a (preset/pre-agreed) specific level or higher among the sensors that the server may use in prediction/correction of the location/predicted path of the UE, and(/or) when the number of such sensors is equal to or greater than a specific number.
   -- When the server has sensor measurement value information for an area outside the sensor coverage of the UE, or has information obtained from messages transmitted/received in the area, or there is a UE in communication with(/connected to) the server in the area.
   -- When the number of surrounding messages including information about UE A and/or UE A information is equal to or greater than a specific number (during a specific time period). The surrounding messages may be messages that exclude a message transmitted by the target UE (e.g., PSM, VAM, BSM, or CAM) among messages including information about the target UE for which a location/predicted path is to be predicted. Alternatively, the surrounding messages may be messages for the purpose of sharing sensor data including the target UE as an object, or proxy awareness messages (e.g., proxy BSM/CAM/PSM/VAM) for the target UE. Alternatively, sensor data and proxy awareness information about the target UE included in the surrounding messages may be generated/received within a specific time period (or after the specific time period).
   -- When the reliability/accuracy/precision/confidence level of the information about the target UE (e.g., the location/predicted path/size of the UE) included in the surrounding messages is equal to or higher than a specific threshold level.
   -- When the (min/max/average) latency that occurs at the server/RSU side in correcting/verifying/predicting the location/predicted path of the target UE by the server is equal to or lower than a specific level, and/or when the latency, even if it occurs, meets latency requirements of the service used/supported by the target UE.
   -- When the server may support the service of correcting/verifying/predicting the location/predicted path of the target UE based on the data traffic and/or computing power of the server at a current time (or during a specific time period).
- When the quality (e.g., accuracy/precision/confidence level) of positioning/predicted path information that the server may guarantee is equal to or higher than a specific level.
- When the difference between the location and predicted path of the target UE at a current/specific time determined/calculated by the server and the location and predicted path of the target UE included in a message transmitted by the target UE (or information provided to the server) is equal to or greater than a specific value.

The target UE may determine whether the conditions related to the capabilities of the server are satisfied based on correction/prediction information for the location/predicted path of the target UE and/or capability information about the server provided by the server.

### 2) Operation based on server proposal

- The server may identify the status of the target UE related to at least one of the server direct prediction conditions. Alternatively, in the above-described negotiation procedure, the server may transmit condition information related to the server direct prediction conditions to the target UE (UE A). The server may propose to the target UE the provision of a prediction service for prediction/correction of the location/predicted path of the target UE based on the server's help. Herein, the server may provide negotiation assistance information including at least one of the above-described pieces of information a to f and/or the condition information to the target UE. The UE may transmit a message indicating its acceptance or rejection of the service to the server based on the condition information and the negotiation assistance information. (When the UE accepts the proposal,) the server may transmit a message (or a prediction service message) including correction information/supplementary information obtained by directly predicting/correcting the location/predicted path of the target UE.
- Alternatively, the server may propose the prediction service for correcting/supplementing the location/predicted path of the target UE based on its own help to the target UE. For example, in the negotiation process with the UE, the server may provide the negotiation assistance information and the condition information that it may use to the target UE. The server may receive a message indicating acceptance or rejection of the prediction service from the target UE. (When the UE accepts the proposal,) the server may transmit a prediction service message including correction information/supplementary information obtained by directly predicting/correcting the location/predicted path of the target UE.

Although the present disclosure has been described mainly focusing on the operation of calculating/predicting the location, predicted path, status, and type of a UE with a (cellular/direct) communication capability and correcting/adding corresponding information by a server/cloud/MEC/RSU, the proposed content is also equally applicable to the case where a server/cloud/MEC/RSU detects a UE without a (cellular and/or direct) communication capability and calculates/predicts information such as its characteristics/type/speed/acceleration/direction of movement/path history/path prediction and generates/transmits the corresponding information as a message, based on messages it has received and/or information measured by sensors interworking with the server/cloud/MEC/RSU and/or an AI/ML algorithm. In this case, the operation of generating/transmitting a proxy awareness message (e.g., SAE or surrogate BSM) for the UE by the server/cloud/MEC/RSU may be considered to be based on the present disclosure.

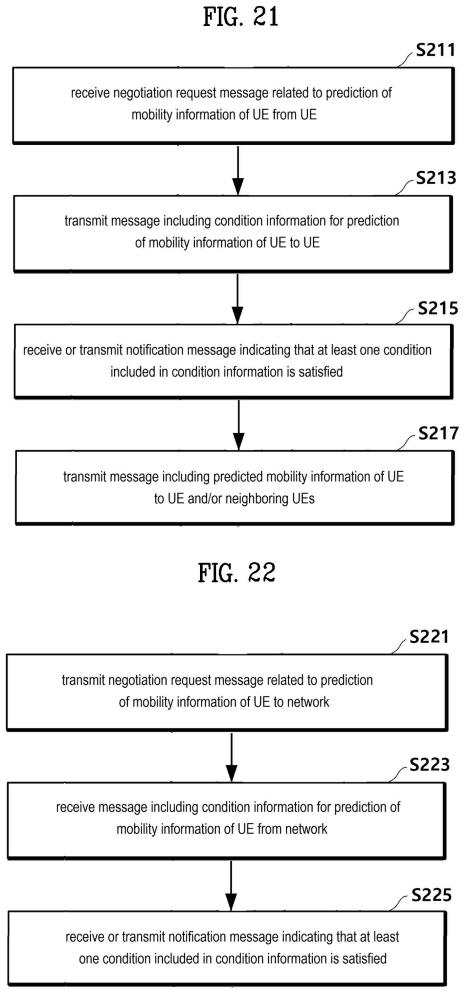

FIG. 21 is a diagram illustrating a method for transmitting a message for a prediction service to a UE by a network.

Referring to FIG. 21, the network (or, server/MEC/cloud/RSU) may receive a negotiation request message related to prediction of mobility information of the UE from the UE (S211). For example, when the UE lacks the ability to predict its own mobility information or when battery saving is needed (refer to the above-described server direct prediction conditions), the UE may transmit the negotiation request message. Alternatively, the UE may transmit a message that does not include its own mobility information to the network, and the message may be recognized as the negotiation request message.

Subsequently, the network may transmit a message including condition information for the prediction of the mobility information of the UE by the network to the UE (S213). Specifically, the network may transmit information about at least one of the above-described server direct prediction conditions to the UE as the condition information. For example, the network may provide the UE with condition information including information about at least one of a first threshold related to the processing capability of the UE, a second threshold related to the computing power of the UE, or a third threshold related to the accuracy of mobility prediction of the UE. In this case, when the processing capability of the UE is below the first threshold, the computing power of the UE is below the second threshold, or the accuracy of mobility information of the UE is below the third threshold, the prediction service may be started.

Alternatively, the network may determine the at least one condition and/or threshold for the UE from among the server direct prediction conditions, based on the number of UEs connected to it, the number of UEs to which the prediction service is being provided, the number and types of sensors from which it may acquire mobility information of the UE, and the number of messages including mobility information (e.g., object information) of the UE. For example, the network may provide, as the condition information, the first threshold related to the processing capability of the UE, the second threshold related to the computing power of the UE, and the third threshold related to the accuracy of mobility prediction of the UE from among the server direct prediction conditions, based on the number of UEs connected to it and/or the number of UEs to which the prediction service is being provided. The first threshold, the second threshold, and the third threshold may be changed, based on the number of UEs connected to the network or the number of UEs for which the prediction of UE mobility information is performed by the network. For example, the first threshold, the second threshold, and the third threshold may be set relatively higher, when the number of UEs connected to the network and/or the number of UEs to which the prediction service is being provided is equal to or greater than a specific threshold number than when the number of UEs connected to it and/or the number of UEs to which the prediction service is being provided is less than the specific threshold number.

Alternatively, the condition information may further include a fourth threshold related to the prediction complexity of mobility information caused by a surrounding environment of the UE. For example, the fourth threshold may be further included in the condition information, based on the number and types of sensors from which the network may acquire mobility information of the UE, and/or the number of messages including mobility information (e.g., object information) of the UE being equal to or greater than a specific number. In this case, the network or the UE may calculate the complexity based on the curvature of a road on which the UE is driving/located. Alternatively, when the curvature of the road is equal to or greater than a specific curvature, the network or the UE may determine that the prediction complexity is equal to or greater than the fourth threshold and start/provide the prediction service.

Alternatively, the network may also transmit the above-described negotiation assistance information to the UE, in addition to the condition information. The negotiation assistance information may include at least one of the number of sensors that the network uses to predict the mobility information of the UE, the types of the sensors, the number of messages including object information of the UE from neighboring UEs, or the difference between mobility information of the UE predicted by the UE and mobility information of the UE predicted by the network. Alternatively, the negotiation assistance information may (further) include information about a latency from the prediction of the mobility information of the UE by the network to the transmission of a prediction message. The UE may provide a message indicating refusal or acceptance of the prediction service provided by the network to the network, based on the negotiation assistance information. Alternatively, when the UE determines that it is difficult for the network to provide an appropriate prediction service to the UE, based on the negotiation assistance information, it may transmit a message indicating refusal of the provision of the prediction service to the network.

Subsequently, the network may receive, from the UE, a notification message indicating that at least one condition included in the condition information is satisfied, or it may transmit, to the UE, a notification message indicating that at least one condition included in the condition information is satisfied (S215). When the network transmits the notification message, the network may determine whether the at least one condition is satisfied based on information (the processing capability, computing power, remaining power, and mobility information of the UE) related to the above-described server direct prediction conditions provided by the UE. When only the network transmits the notification message, it may not transmit the notification message to the UE even if the at least one condition is met, when the number of sensors from which it may acquire mobility information of the UE, the types of the sensors, and/or the number of messages including mobility information (e.g., object information) of the UE is less than a specific threshold number (during a specific time period before the condition is met). This is because the accuracy of the mobility information of the UE predicted by the network may be low due to a lack of information required for predicting the mobility information of the UE. In this case, instead of the notification message, the network may transmit, to the UE, indication information indicating that the number of sensors from which it may obtain mobility information of the UE, the types of sensors, and/or the number of messages including mobility information of the UE is less than the specific threshold number.

Alternatively, when the processing capability of the UE is below the first threshold, the computing power of the UE is below the second threshold, or the accuracy of mobility information of the UE is below the third threshold, the network may transmit the notification message to the UE.

Subsequently, after transmitting the notification message, the network may transmit a message including predicted mobility information of the UE (e.g., the location/predicted path of the UE) to the UE and/or neighboring UEs (S217). As described above, the network may directly predict the mobility information of the UE based on object information (and/or mobility information and sensor sharing information) of the UE included in messages from the neighboring UEs and information that it has obtained from its own sensors, and transmit a message including the predicted mobility information of the UE to the UE and/or the neighboring UEs. As described above, the message may be a forwarding message that forwards a message received from the UE, a prediction service message in which the values of some data elements/fields in the message from the message have been modified/added based on the predicted mobility information of the UE, or a new message that includes the predicted mobility information of the UE (in this case, it is a message type (a sensor sharing data message including the UE as object information) different from the message (UE awareness message) from the UE).

FIG. 22 is a diagram illustrating a method for performing an operation for receiving a prediction service from a network by a UE.

Referring to FIG. 22, the UE may transmit a negotiation request message related to prediction of mobility information of the UE to the network (S221). The UE may be a UE that periodically transmits a message including mobility information of the UE that it has predicted/calculated to the network. Alternatively, when the battery level, processing capacity, or computing power of the UE falls below a specific threshold, the UE may transmit the negotiation request message to the network. Alternatively, the UE may also request a negotiation related to the prediction of the mobility information of the UE by transmitting the periodic message without the mobility information.

Subsequently, the UE may receive, from the network, a message including condition information for predicting the mobility information of the UE by the network (S223). For example, the UE may receive the condition information, which includes information about at least one condition determined from among the server direct prediction conditions, based on the number of UEs connected to the network, the number of UEs to which the prediction service is being provided, the number and types of sensors from which mobility information of the UE may be obtained, and the number of messages including mobility information (e.g., object information) of the UE. A threshold related to the condition may be changed/adjusted based on the number of UEs connected to the network or the number of UEs for which the network performs mobility information prediction. Alternatively, the condition information may further include a fourth threshold related to the prediction complexity of mobility information based on a surrounding environment of the UE. In this case, the UE may determine/decide whether a prediction complexity equal to or greater than the fourth threshold occurs based on the curvature of a road on which it is located/driving (refer to the aforementioned server direct prediction condition D).

Alternatively, the UE may further receive the aforementioned negotiation assistance information from the network. The negotiation assistance information may include at least one of the number of sensors that the network uses to predict the mobility information of the UE, the types of the sensors, the number of messages including object information of the UE from surrounding UEs, or the difference between mobility information predicted by the UE and mobility information predicted by the network. Alternatively, the negotiation assistance information may (further) include information about a latency until the network predicts the mobility information of the UE and transmits a prediction message. Based on the negotiation assistance information, the UE may provide the network with a message that accepts or rejects the prediction service the network will provide. Alternatively, when the UE determines that it is difficult for the network to provide an appropriate prediction service to the UE, based on the negotiation assistance information, the UE may transmit a message that rejects the provision of the prediction service to the network.

Subsequently, the UE may receive a notification message indicating that at least one condition included in the condition information is satisfied from the network or directly transmit the notification message (S225). In this case, the UE may expect to receive, from the network, a message including the mobility information of the UE predicted by the network, or expect that a message including the mobility information of the UE predicted by the network will be transmitted to its neighboring UEs.

As such, the proposed disclosure may significantly increase the accuracy/precision of the mobility information of a UE and greatly improve the quality of other safety services based on the mobility information of the UE by allowing a network to predict the mobility information of the UE on behalf of the UE and transmit a message including the mobility information predicted by the network to neighboring UEs. Alternatively, the proposed disclosure may clearly predict/detect a situation where the UE may get network assistance for the prediction of its mobility information or a situation where the network may help predict the mobility information of the UE by pre-providing conditions for predicting the mobility information of the UE by the network during a negotiation process. Alternatively, since the conditions for predicting the mobility information of the UE by the network on behalf of the UE are provided in advance, the proposed disclosure may ensure that the mobility information of the UE may be predicted by the network quickly in a situation where a prediction service is needed, by simply transmitting a notification message. Alternatively, since the network predicts the mobility information of the UE based on direct reception of a negotiation request message from the UE, the network does not need separate approval for collection and tracking of personal information such as the location of the UE in the proposed disclosure.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

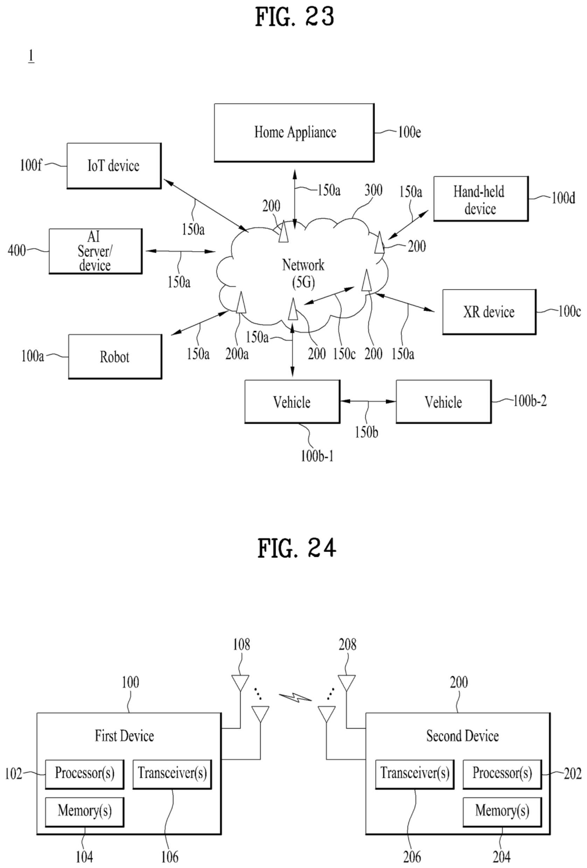

FIG. 23 illustrates a communication system applied to the present disclosure.

Referring to FIG. 23, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 24 illustrates a wireless device applicable to the present disclosure.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or network 100 may include the processor 102 connected to the transceiver 106, and the memory 104. The memory 104 may include at least one program for performing operations related to the embodiments described with reference to FIGS. 17 to 22.

The processor 102 may control the transceiver 106 to receive a negotiation request message related to prediction of mobility information of a UE from the UE, transmit a message including condition information for the prediction of the mobility information of the UE by the network to the UE, and based on receiving or transmitting a notification message indicating that at least one condition included in the condition information is satisfied, transmit a message including predicted mobility information of the UE.

Alternatively, a processing device including the processor 102 for controlling a network that transmits a message, and the memory 104 may be configured. In this case, the processing device may include at least one processor, and at least one memory connected to the at least one processor and storing instructions which, when executed by the at least one processor, cause the network to receive a negotiation request message related to prediction of mobility information of a user equipment (UE) from the UE, transmit a message including condition information for the prediction of the mobility information of the UE by the network to the UE, and based on receiving or transmitting a notification message indicating that at least one condition included in the condition information is satisfied, transmit a message including predicted mobility information of the UE.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or UE 200 may include the processor 202 connected to the transceiver or RF transceiver 206, and the memory 204. The memory 204 may include at least one program for performing operations related to the embodiments described with reference to FIGS. 17 to 22.

The processor 202 may control the transceiver 206 to transmit a negotiation request message related to prediction of mobility information of the UE to the network, receive a message including condition information for the prediction of the mobility information of the UE by the network from the network, and receive or transmit a notification message indicating that at least one condition included in the condition information is satisfied.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

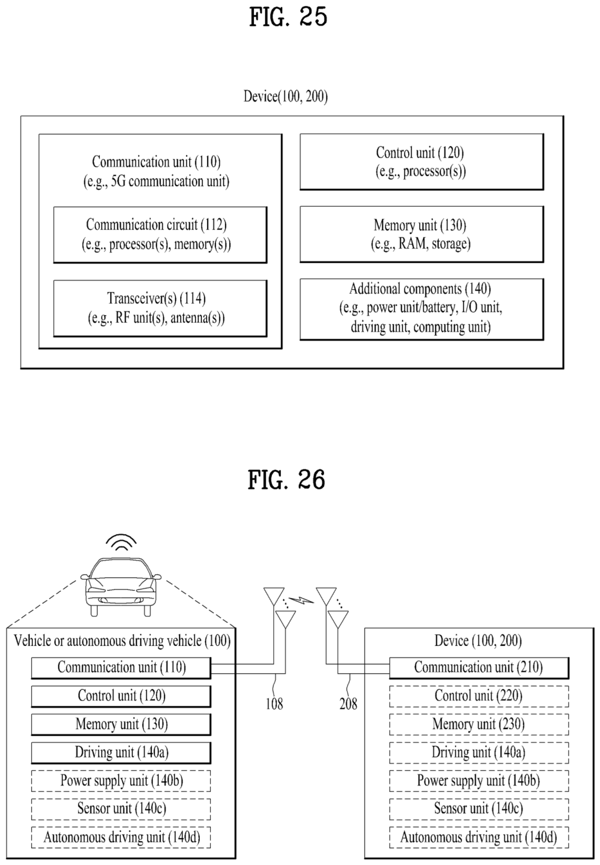

FIG. 25 illustrates another example of a wireless device applied to the present disclosure. The wireless device may be implemented in various forms according to a use-case/service (refer to FIG. 23)

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 26 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 26, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultraacoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method for transmitting a message by a network in a wireless communication system, the method comprising:
receiving a negotiation request message related to prediction of mobility information of a user equipment (UE) from the UE;
transmitting a message including condition information for the prediction of the mobility information of the UE by the network to the UE; and
based on receiving or transmitting a notification message indicating that at least one condition included in the condition information is satisfied, transmitting a message including predicted mobility information of the UE.

2. The method of claim 1, wherein the condition information includes information about at least one of a first threshold related to a processing capability of the UE, a second threshold related to computing power of the UE, or a third threshold related to accuracy of mobility prediction of the UE.

3. The method of claim 2, wherein the first threshold, the second threshold, and the third threshold are changed based on the number of UEs connected to the network or the number of UEs for which the network performs mobility information prediction.

4. The method of claim 2, wherein when the processing capability of the UE is below the first threshold, the computing power of the UE is below the second threshold, or the accuracy of the mobility information of the UE is below the third threshold, the notification message is received or transmitted.

5. The method of claim 2, wherein the condition information further includes a fourth threshold related to prediction complexity of the mobility information caused by a surrounding environment of the UE.

6. The method of claim 5, wherein the prediction complexity of the mobility information is calculated based on a curvature of a road on which the UE is located.

7. The method of claim 1, further comprising:
further transmitting negotiation assistance information to the UE; and
receiving, from the UE, a message indicating whether the prediction of the mobility information of the UE by the network is accepted, determined based on the negotiation assistance information.

8. The method of claim 7, wherein the negotiation assistance information includes information about at least one of the number of sensors that the network uses to predict the mobility information of the UE, types of the sensors, the number of messages from neighboring UEs that include object information of the UE, or a difference between mobility information of the UE predicted by the UE and mobility information of the UE predicted by the network.

9. A computer-readable recording medium having a program recorded thereon for performing the method of claim 1.

10. A network for transmitting a message in a wireless communication system, comprising:
a radio frequency (RF) transceiver; and
a processor connected to the RF transceiver,
wherein the processor controls the RF transceiver to receive a negotiation request message related to prediction of mobility information of a user equipment (UE) from the UE, transmit a message including condition information for the prediction of the mobility information of the UE by the network to the UE, and based on receiving or transmitting a notification message indicating that at least one condition included in the condition information is satisfied, transmit a message including predicted mobility information of the UE.

11. A processing device for controlling a network transmitting a message in a wireless communication system, the processing device comprising:
at least one processor; and
at least one memory connected to the at least one processor and storing instructions which, when executed by the at least one processor, cause the network to receive a negotiation request message related to prediction of mobility information of a user equipment (UE) from the UE, transmit a message including condition information for the prediction of the mobility information of the UE by the network to the UE, and based on receiving or transmitting a notification message indicating that at least one condition included in the condition information is satisfied, transmit a message including predicted mobility information of the UE.

12. A method for receiving a message from a network by a user equipment (UE) in a wireless communication system, the method comprising:
transmitting a negotiation request message related to prediction of mobility information of the UE to the network;
receiving a message including condition information for the prediction of the mobility information of the UE by the network from the network; and
receiving or transmitting a notification message indicating that at least one condition included in the condition information is satisfied.

13. A computer-readable recording medium having a program recorded thereon for performing the method of claim 12.

14. A user equipment (UE) for receiving a message from a network in a wireless communication system, the UE comprising:
a radio frequency (RF) transceiver; and
a processor connected to the RF transceiver,
wherein the processor controls the RF transceiver to transmit a negotiation request message related to prediction of mobility information of the UE to the network, receive a message including condition information for the prediction of the mobility information of the UE by the network from the network, and receive or transmit a notification message indicating that at least one condition included in the condition information is satisfied.

15. A processing device for controlling a user equipment (UE) receiving a message from a network in a wireless communication system, the processing device comprising:
at least one processor; and
at least one memory connected to the at least one processor and storing instructions which, when executed by the at least one processor, cause the UE to transmit a negotiation request message related to prediction of mobility information of the UE to the network, receive a message including condition information for the prediction of the mobility information of the UE by the network from the network, and receive or transmit a notification message indicating that at least one condition included in the condition information is satisfied.
